# EUROPÄISCHE PATENTSCHRIFT

(11) **EP 1 696 517 B1**
(45) Veröffentlichungstag und Bekanntmachung des Hinweises auf die Patenterteilung: **26.09.2007**
(21) Anmeldenummer: 05027268.1
(22) Anmeldetag: 14.12.2005
(51) Int. Cl.: H01R 13/53

(54) **Steckvorrichtung für Geräte oder Kabel an eine elektrische Anlage**
Connector assembly for devices or cables to an electric installation
Dispositif de connexion pour appareils ou câbles à une installation électrique

(30) Priorität: 25.02.2005 DE 102005008680
(43) Veröffentlichungstag der Anmeldung: 30.08.2006
(73) Patentinhaber: nkt cables GmbH, 26954 Nordenham (DE)
(72) Erfinder: Müller, Peter, 26954 Nordenham (DE); Hinz, Jürgen, 26954 Nordenham (DE); Meyer, Stephan, 26919 Brake (DE)

(56) Entgegenhaltungen:
- DE-A1- 3 110 660
- US-A- 3 343 153
- US-A- 4 629 277
- US-A- 5 114 357

## Beschreibung

Die Erfindung betrifft eine Steckvorrichtung für Kabel- oder Geräteverbindungen im Mittel- oder Hochspannungsbereich.

Am Markt sind unterschiedliche Anschlusssysteme, insbesondere Kabelverbindungen als Innenkonusgamituren bekannt.

Für Isoliergas oder Isolierfluid gefüllte Hochspannungsanlagen wird in DE 197 48 887 C1 ein Steckverbindungssystem dargestellt, bei dem Stecker- und Buchsenteil ausdrücklich nicht im Inneren der Anlage angeordnet sind. Dadurch ergibt sich ein extrem langer - als nachteilig betrachteter - Aufbau der Vorrichtung außerhalb der Hochspannungsanlagen.

Es sind weitere Vorrichtungen bekannt, beispielsweise in DE 100 41 917 A1, in DE 195 08 975 A1 oder in DE 19806387 A1.

Vorgenannte Anschlusssysteme haben eine Reihe von Nachteilen. Hier wird besonders auf Kabelverbindungen eingegangen. Bei dem Anschluss eines Kabels wird ein Silikonkörper mit einem integrierten Steuertrichter über das abgesetzte Kabel geschoben. Der integrierte Steuertrichter steuert die Leitschichtkante vom Kabel aus. Der konusförmige Abschluss des Silikonkörpers muss den Gegenkonus der Durchführung spannungsfest abdichten. Dazu liegt auf einem Befestigungselement (z.B. ein Flansch) eine Andruckvorrichtung (z.B. Druckfedern) auf. Bei der Montage wird von der Andruckvorrichtung auf den Silikonkörper der notwendige Anpressdruck erzeugt.

Eine unverletzte und unverformte Ausbildung der Grenzflächen zur Durchführung und zur Kabelader sind wichtige Voraussetzungen für einen problemlosen Betrieb der Garnitur. Da der elastische Isolierkörper sich dem Kabeldurchmesser anpassen muss, ändert sich sein Außenkonus in Abhängigkeit vom vorliegenden Kabel. Daher muss für jeden Kabelquerschnitt ein separater angepasster und die Feldsteuerelemente enthaltender Silikonkörper eingesetzt werden.

Die stromführende Verbindung wird über einen Kontakt (zum Beispiel als Steckkontakt in DE 31 10 660 C2; oder als Lamellenkontakt in der DE 19806387 A1) mit dem Kabelleiter hergestellt. Auch hier sind für jeden Leiterquerschnitt angepasste Kontaktelemente notwendig. Zur Montage dieser Bauteile müssen dann auch spezielle Presszangen eingesetzt werden.

Bei älteren Anschlusssystemen sind auch Schraubverbindungen bekannt (beispielsweise in der US 3343153, die eine Vorrichtung gemäß dem Oberbegriff des Anspruchs 1 beschreibt). Wobei eine Schraubtechnik arbeitsaufwendiger ist als eine Stecktechnik. Auf den Kabelleiter wird hierbei ein Gewindebolzen gecrimpt, welcher passend zu einer im Stecker ausgebildeten Gewindebohrung ausgebildet ist. Mehrbereichsanwendungen sind nur durch Änderung und/oder Wechsel der Schraubelemente möglich.

Diese Abhängigkeiten der Kabelabmessungen (Leiterquerschnitt für die Kontaktierung und Durchmesser über Aderisolation für den Silikonkörper) zu den geometrischen Abmessungen der Durchführungsgröße limitieren somit den Anwendungsfall pro Durchführungsgröße.

Normen für Garnituren und Durchführungen sind unter EN 50180 und EN 50181 beschrieben, wodurch schon technische Vorgaben vorhanden sind.

Ausgehend von der DE 31 10 660 C2 ist es die Aufgabe der Erfindung, eine Steckvorrichtung für Geräte oder Kabel insbesondere in Innenkonustechnik für die Durchführungen nach EN 50180 und 50181 zu realisieren, die eine Anwendung für unterschiedliche Geräte- oder Kabeldimensionen zulässt und wobei auch die Teilezahl der Steckvorrichtung vermindert ist.

Mit der Erfindung wird eine sogenannte Mehrbereichsanwendung in Bezug auf unterschiedliche Spannungsebenen und Stromstärken für den Gegenstand möglich.

Die Lösung der Aufgabe findet sich im Hauptanspruch, weitere Ausführungsformen sind in den Unteransprüchen formuliert.

Es besteht eine Reihe von Vorteilen bei der Erfindung. Für die Stromverbindung sind keine speziellen Montagewerkzeuge notwendig. Es entstehen Montage- und Investitionsvorteile. Die Mehrbereichstechnik hat in der Produktion fertigungstechnische Vorteile durch die Reduzierung der Bauteilvielfalt.

Das vorgelegte Prinzip besteht darin, dass immer eine gleichbleibende Geometrie vorhanden ist, weil das Steckerteil im elektrisch wichtigen Konusbereich nicht verformt wird.

Der Kern der Erfindung besteht darin, dass das Steckerteil auf seiner gesamten Länge aus elastischem Werkstoff - vorzugsweise aus Silikonkautschuk - hergestellt ist, dass im Steckerteil mindestens eine Aufnahmeöffnung für ein Gerät oder ein Kabelende ausgebildet ist, und dass das Aufnahmemittel am Steckerteil als ringförmige Befestigungsnut und die Befestigungsmittel als zylindrische Hülse und an die Hülse angreifender Befestigungsring ausgebildet sind, wobei die Abmessungen der Nut der Aufnahme der Hülse entsprechend geformt sind.

An der Hülse ist ein Kragen vorhanden, an den der Befestigungsring angreift. Im Befestigungsring sind Bohrungen für die Aufnahme der Schrauben vorhanden, die in Bohrungen am Buchsenteil oder an der Anlagengehäuseöffnung eingreifen. Der Einpressdruck erfolgt durch Schraubenfedern, die auf den Schraubenbolzen sitzen.

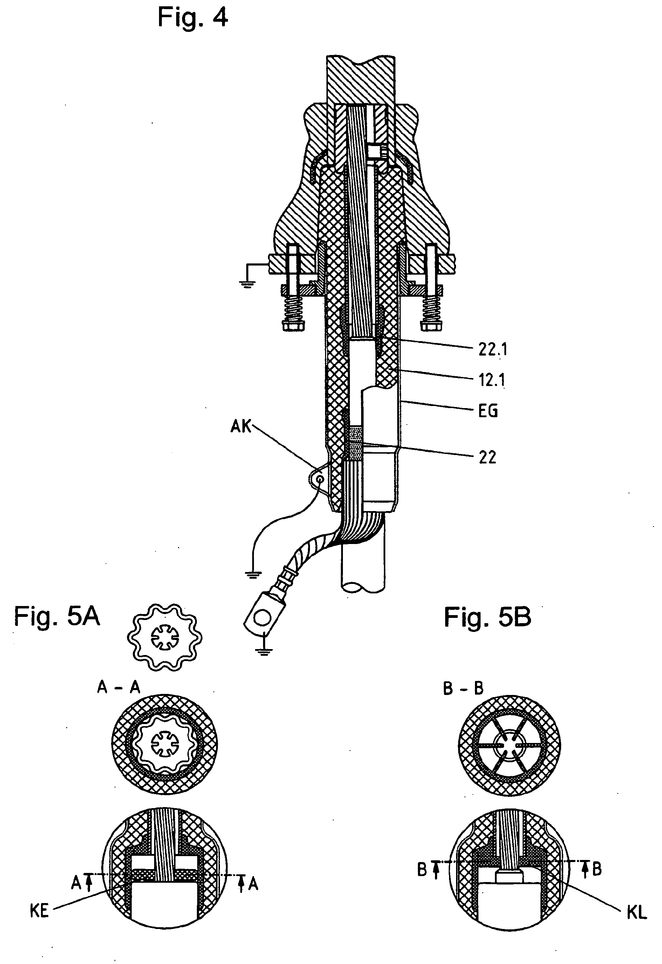

Die Aufnahmeöffnung für das Kabelende oder das Gerät am Steckerteil ist sehr weit außen ausgebildet. Das heißt, dass die Öffnung außerhalb des das Steckerteil verspannenden Wirkungsbereichs der Kräfte der Befestigungsmittel liegt. Die von den Befestigungsmitteln (Schrauben und Federn) aufgebrachten Kräfte verspannen zu einem gewissen Maße den elastomeren Körper des Steckerteils. Die Abmessungen der weit außen liegenden Aufnahmeöffnung, die Passgenauigkeit des einzuführenden Kabels oder des Geräts und die Position der Feldsteuerelemente wird durch die verspannenden Kräfte nicht beeinflusst. Hinzu kommt, dass im Steckerteil ein starres Stützrohr ausgebildet ist, welches noch beschrieben wird. Auch dieses Stützrohr nimmt Kräfte auf, so dass die Anpresskräfte eine Verformung von kritischen Stellen der Steckvorrichtung - und dies sind insbesondere die unstetigen Potential-Übergänge - nicht vornehmen. Eine solche Ausführungsform findet sich in Fig. 4 und wird dazu beschrieben.

Weitere Ausgestaltungen sind folgende:

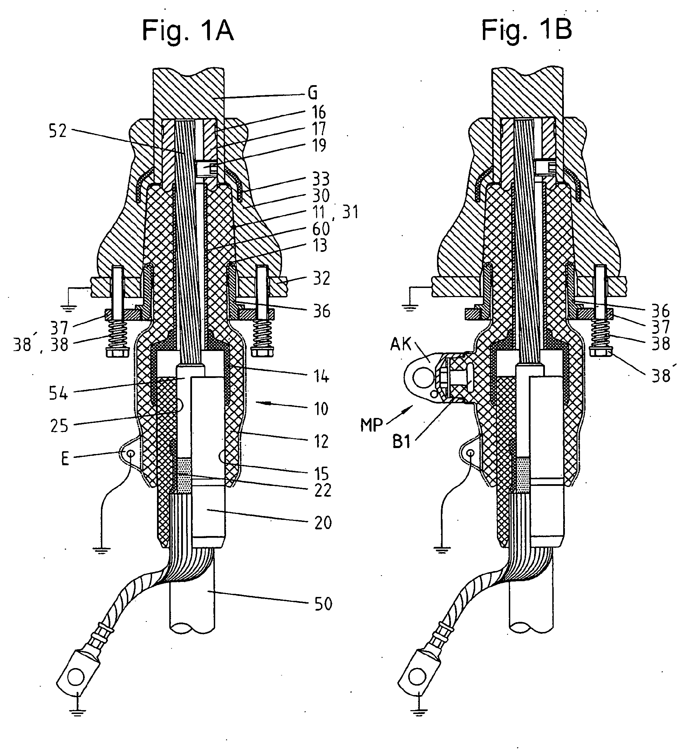

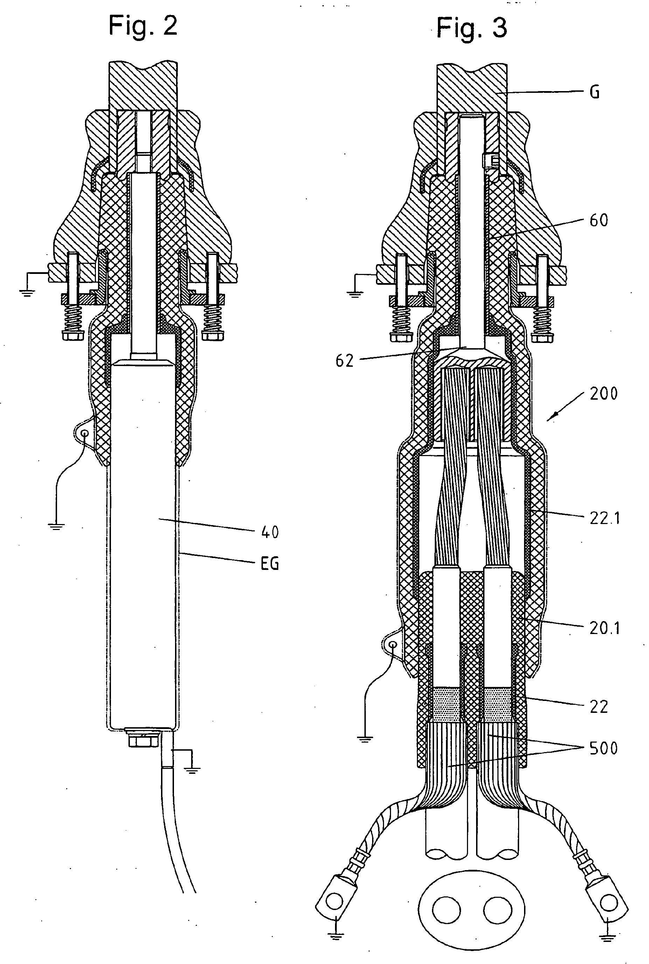

Das Steckerteil kann einteilig oder zweiteilig ausgebildet sein. Bei zweiteiligem Aufbau besteht das Steckerteil aus einem im wesentlichen rotationssymmetrischen Adapterstück und einem Grundkörper, wobei das Adapterstück mit mindestens einem Einführkanal für ein Ende eines Kabels oder eines Geräts ausgebildet ist, und der Grundkörper einen Aufnahmekanal aufweist, der dem Außendurchmesser des Adapterstücks entspricht. Zweiteilige Steckerteile werden (mit Beschreibung) in den Figuren 1A, 1 B und 3 dargestellt.

Der Einführkanal im Adapterstück (von Länge und Durchmesser) ist für unterschiedliche Querschnitte der Kabelenden oder des zu steckenden Geräts ausgebildet.

Das Adapterstück ist im wesentlichen rotationssymmetrisch und mit einer zylindrischen Au-ßenform ausgebildet. Das Steckerteil ist im wesentlichen rotationssymmetrisch und mit einer zur Außenform des Adapterstücks passenden zylindrischen Innenform gestaltet.

Im Steckerteil ist in zentraler Lage ein metallisches Rohr (Stützrohr) eingelegt, dessen Innendurchmesser größer ist als der Durchmesser des Leiters eines zu verbindenden Kabels oder Geräts.

Die Oberfläche des Steckerteils sollte halbleitend ausgebildet sein und am Steckerteil können Mittel zum Kontaktieren der Oberfläche mit Erdpotential vorhanden sein.

Im Steckerteil kann eine Elektrode integriert sein, die als kapazitives Messelement zum Abgriff von Ladung ausgebildet ist.

Die Erfindung ist in mehreren Figuren dargestellt, wobei diese im Einzelnen zeigen:
Fig. 1A eine zweiteilige Steckvorrichtung im montierten Zustand,
Fig. 1 B eine Steckvorrichtung mit kapazitiver Messvorrichtung am Grundkörper,
Fig. 2 einen Überspannungsableiter als Innenkonus-System,
Fig. 3 eine Steckvorrichtung für ein Doppelkabel,
Fig. 4 eine einteilige Steckvorrichtung, und
Fig. 5A und 5B zwei Kontaktierungsvarianten.

Die Erfindung besteht aus einer Steckvorrichtung in Form eines Anlagenanschlussteils (im folgenden Buchsenteil 30 genannt) mit konischer Berührung im zentralen Durchgangskanal und einem Steckerteil mit Außenkonus 11. Das Buchsenteil 30 besteht aus einem formstabilen Isolierwerkstoff, beispielsweise aus Gießharz. Die Steckvorrichtung wird an einer Öffnung (Flansch 32 in Fig. 1) einer elektrischen Anlage G befestigt. Der Einsatz ist vorgesehen für den Spannungsbereich ab 6 kV, beispielsweise für den Spannungsbereich zwischen 6 kV und 36 kV.

Die folgende Beschreibung behandelt vorrangig Kabelverbindungen, doch soll darin keine Beschränkung allein auf Kabelverbindungen verstanden werden. Die Steckvorrichtung soll ebenso für andere steckbare Teile oder Geräte beansprucht werden, beispielsweise für Überspannungsableiter. Wenn also jeweils Kabel angesprochen werden, sollen die Ausführungen - soweit technisch übertragbar - auch für andere steckbare Geräte gelten.

Das Steckerteil 10 der Steckvorrichtung nach Figur 1A ist zweiteilig aufgebaut, und besteht aus einem Grundkörper 12 und einem Adapterstück 20. Das obere Ende der Steckvorrichtung (Buchsenteil 30) führt weiter in das Gehäuse einer Schaltanlage G oder drgl. an einen Stromkontakt, welcher beispielsweise aus einer Stromschiene bestehen kann.

Am Grundkörper 12 ist zur Verbindung mit dem Gegenkonus 31 der Durchführung 30 ein Außenkonus 11 angeformt. Der Grundkörper 12 hat eine zentrale Öffnung (Aufnahmekanal 15) zur Aufnahme eines separaten Adapterstücks 20. Das Adapterstück 20 ist im wesentlichen rotationssymmetrisch, mit einer zylindrischen Außenform ausgebildet. Das Steckerteil 10 ist ebenso im wesentlichen rotationssymmetrisch, mit einer zur zylindrischen Außenform des Adapterstücks 20 passenden zylindrischen Innenform ausgebildet.

Der Grundkörper 12 hat ein integriertes Stützrohr 60, durch den der Kabelleiter 52 des Kabels 50 geführt wird, und ein integriertes Steuerteil 14 zur Absteuerung der Enden vom Stützrohr und vom Adapterstück. Steuerteil und Grundkörper sind in Spritzgussverbundtechnik hergestellt. Das Stützrohr ist vorzugsweise von dem Elastomer des Grundkörpers umgossen. Beide Teile sind somit relativ fest miteinander verbunden. Der Durchmesser des Stützrohrs ist so groß gewählt, dass noch der größte Leiterquerschnitt, der für eine Anwendung vorliegen kann, durch das Stützrohr hindurchgeführt werden kann. Das Adapterstück 20 übernimmt die Anpassung der Kabelabmessungen und die Aussteuerung des Leitschichtendes durch ein integriertes Feldsteuerteil 22. Durch die erfindungsgemäße Ausgestaltung und die Ausnutzung der Dehnbarkeit des Werkstoffs kann ein einziges Adapterstück bei allen Gerätemaßen oder Kabelquerschnitten z.B. zwischen 95 und 240 mm² eingesetzt werden.

Die halbleitende Beschichtung des Steckerteils, bzw. des Grundkörpers 12 (in Fig. 1 strichpunktiert dargestellt) reicht bis in die Tiefe der Befestigungsnut 13, so dass über die metallische Druckhülse 36 ebenfalls Potentialausgleich über den Flansch 32 zum Gehäuse der elektrischen Anlage stattfindet. Dadurch ist die als Innenkonusstecker ausgebildete Garnitur berührungssicher. Über einen Erdungsanschluss E wird die leitfähige Beschichtung geerdet. Ggf. erfolgt die Erdung auch indirekt über die Befestigung mit der Erdung des als Anschlussplatte ausgebildeten Flansches 32 am Anlagengehäuse.

Die Befestigungsvorrichtung besteht aus einer zylindrischen Druckhülse 36, einem Befestigungsring 37 und einer Schraubverbindung (38') mit Druckfedern 38. Die Druckfedern übertragen den notwendigen Anpressdruck auf die Druckhülse. Die Hülse 36 sitzt am Ende des Außenkonus des Steckerteils (oder des Grundkörpers) in einer passgenauen Nut 13. Die Druckhülse greift dort am Steckerteil (oder Grundkörper) an. Eine Verformung des Steckerteils (oder des Grundkörpers) hält sich in Grenzen, da das starre Stützrohr die Anpresskräfte aufnimmt.

Die stromführende Verbindung vom Kabelleiter in das Gerät (G) wird in der Steckvorrichtung in Schraubtechnik ausgeführt, wodurch auch hier eine Mehrbereichsanwendung erzielt wird. Üblicherweise können solche Schraubverbindungen Leiterquerschnitte von z.B. 95 - 240 mm² verbinden. Über eine oder mehrere Abreißschrauben 19 wird der eingeführte Kabelleiter gegen den Schraubsteckkontakt 17 gedrückt. Ein Lamellenkontakt 16 stellt die Verbindung zum beispielsweise als Kontaktbuchse ausgeführten Stromanschluss G der Durchführung 30 her.

Die unterschiedlichen Leiterquerschnitte werden durch das Stützrohr geführt, ohne dass eine Verformung bei der Montage und Befestigung des Grundkörpers auftreten kann. Die Anpassung zu den Kabelbauarten oder zu unterschiedlichen Geräten erfolgt durch das Adapterstück. Die bei der Montage durch das Aufschieben der Teile auftretende Dehnung des Steckerteils (oder des Grundkörpers) geschieht im freien Bereich außerhalb der Durchführung, wodurch die elektrische Aussteuerung der unstetigen Übergänge nicht beeinflusst wird.

Zur Montage sind keine Sonderwerkzeuge, wie z.B. spezielle Presszangen notwendig. Über einen handelsüblichen Maul- oder Ringschlüssel können die Abreißschrauben montiert werden.

Eine weitere Ausführungsform ist in Figur 1 B dargestellt, wo in dem Grundkörper eine kapazitive Messmöglichkeit für den Spannungszustand integriert ist. Der Messpunkt MP für die kapazitive Messung besteht aus einer in den Grundkörper eingebetteten leitfähigen Elektrode B1, die durch Entfernen der leitfähigen Abdeckkappe AK vom Erdpotential der äußeren leitfähigen Beschichtung getrennt wird und sich dadurch auflädt. Die auftretende elektrische Ladung kann für Messzwecke genutzt werden.

Ein weiterer Vorteil des zweiteiligen Prinzips (Grundkörper und Adapterstück) ist, dass die Aufnahmeöffnung (15) auch zum Einführen anderer Teile genutzt werden kann. Beispielsweise ist in Fig. 2 anstelle des Adapterstücks 20 ein Überspannungsableiter-Modul 40 eingeschoben gezeigt. Dadurch kann mit demselben Grundkörper ein kompletter Überspannungsableiter für Innenkonus realisiert werden. Der Überspannungsableiter ist durch eine partielle Aufbringen einer äußeren leitfähigen Beschichtung (strichpunktierter Bereich EG) komplett berührungssicher. Die leitfähige Beschichtung reicht nicht bis in den Bereich der Steuerelemente 14 des Grundkörpers.

Als Vorteil der Erfindung wird angesehen, dass der Gegenstand auch für Stromzuführungen mit höheren Leistungen einsetzbar ist. Die Figur 3 zeigt beispielhaft einen derartigen Einsatz. Hierbei wird ein Doppelkabel 500 über eine weitere Ausführungsform der Steckvorrichtung an ein Gerät G angeschlossen. Identische Einzelheiten, wie sie in der Figur 1 gezeigt sind, werden nicht erneut beschrieben. Der Grundkörper 200 ist größer und länger. Er nimmt einen Adapterkörper 20.1 auf. Der Querschnitt des Adapterkörpers ist elliptisch ausgebildet, wie im unteren teil der Figur angedeutet. Im Adapterkörper 20.1 sind kreisförmig zwei Aufnahmekanäle für je ein Kabelende ausgebildet. Der Grundkörper hat eine Einführungsöffnung, die zum Adapterkörper passend ebenfalls elliptischen Querschnitt hat. Zum Übergang von den beiden Kabeladern auf das Gerät ist ein metallisches Kopfstück (62) eingebracht. Im zu den Kabeln (50) hin gerichteten Teil des Kopfstücks sind die Leiterenden befestigt. Zum Buchsenteil hin gerichtet ist ebenfalls ein Stützrohr (60) ausgebildet. Das Aufnahmeteil für die Leiterenden und das Kopfstück (62) bilden ein einziges Teil.

Mit dieser Ausführungsform können somit größere Ströme je Phase in eine Schaltanlage (G) geführt werden. Dadurch lassen sich aufwendige Mehrfachdurchführungen je Phase vermeiden.

Selbstverständlich kann das dargestellte zweiteilige Prinzip auch auf einen einteiligen Adapter (Grundkörper 12.1) mit einem integrierten Steuertrichter (22.1) zur Aussteuerung der Leitschichtkante reduziert werden. Dies ist dargestellt in Figur 4. Wiederum werden identische Einzelheiten, wie sie in der Figur 1 gezeigt sind, nicht erneut beschrieben. Auch hiermit ist eine Anwendung eines einzigen Grundkörpers für mehrere Durchmesserbereiche möglich, soweit dies noch im zulässigen Bereich der Dehnbarkeit des Werkstoffes liegt, aus dem der einzige Körper hergestellt ist. Wiederum wird der kritische Konusbereich nicht verformt.

In der Darstellung nach Figur 1A wird das Hochspannungspotential vom Kabelleiter über den Schraubsteckkontakt (Bezugszeichen 16 in Fig. 1A) zum Stützrohr und zum Steuerteil übertragen. Ergänzend sind in den Figuren 5A und 5B alternative Kontaktierungsvarianten für diesen Bereich dargestellt. Die in den Figuren 5A und 5B dargestellten Kontaktelemente haben eine innere Durchtrittsöffnung für den Leiter und zum Inneren gerichtete Kontaktspitzen oder -krallen.

Eine erste Variante mittels eines separaten Kontaktelementes (KE) ist in Figur 5A dargestellt. Das metallische, plättchenförmige Kontaktelement (KE), dessen nach innen gerichtete Spitzen sich beim Einführen des Leiters spreizen, stellt einen guten Kontakt her und überträgt das Hochspannungspotential direkt vom Kabelleiter zum Steuerteil (feine Kreuzschraffur in Fig. 5A). Figur 5B zeigt eine weitere Variante. Hier ist ein weiteres elastomeres, leitfähiges Element KL vorhanden, welches über nach innen gerichtete elastomere Kontaktlippen den Leiter direkt kontaktiert. Die Kontaktlippen sind am elastomeren Steuerteil mit angeformt.

### Beschreibung der Montage der Steckverbindung an einem Kabelende

Das Kabel 50 (auch Kabel 500) wird mit den üblichen Arbeitsschritten abgesetzt: Entfernung des Außenmantels, Umbiegen der Schirmdrähte und Anschluss eines Erdungskabelschuhes, Schälen der äußeren Leitschicht, Freilegen des Kabelleiters 52.

Zur Vorbereitung der Montage wird zuerst der Befestigungsring 37 von vorn über den Au-ßenkonus 11 des Steckerteils, bzw. des Grundkörpers geschoben. Anschließend wird die zylindrische, metallische Hülse 36 von vorn über den Außenkonus 11 geschoben. Die Hülse rastet in Art eines ringförmigen Keils in der Befestigungsnut 13 ein. Der Ring 37 hat einen Kragen, in den sich die Hülse 36 legt. Zur Befestigung des Rings am Flansch 32 des Buchsenteils werden Schrauben 38' und Federn 38 verwendet.

Nach der Vorbereitung des Kabelendes 54 wird das Adapterstück 20 auf das Kabelende aufgeschoben. Danach wird das Steckerteil, bzw. der Grundkörper 12 mit an ihm angeordneten Ring 37 und Hülse 36 auf das Kabelende übergeschoben. Der freiliegende Kabelleiter 52 rutscht dabei durch das metallische Stützrohr 60.

Der Schraubsteckkontakt 16 wird über den Kabelleiter 52 geschoben und über die Abreißschraube 19 fest mit dem Kabelleiter verbunden.

Nun kann das montierte Steckerteil in die Durchführung (Buchsenteil 30) geschoben werden. Die Befestigungsschrauben 38' werden in das Buchsenteil eingeschraubt. Ggf. muss die äußere leitfähige Beschichtung der Garnitur noch zusätzlich geerdet werden.

Nach dem Anschließen der Schirmdrähte des Kabels an Erdpotential ist die Garnitur betriebsbereit.

### Bezugszeichen

- AK: Abdeckkappe
- B1: Elektrode
- E: Erdungsanschluss
- EG: leitfähige Beschichtung
- K: Kontaktbuchse
- KE: separates Kontaktelement
- KL: Kontaktlippen
- MP: Messpunkt
- 10: Steckerteil
- 11: Außenkonus
- 12, 12.1: Grundkörper
- 13: Befestigungsnut
- 14: Feldsteuerteil im Grundkörper
- 15: Aufnahmeöffnung
- 15.1: Aufnahmekanal
- 16: Schraubsteckkontakt
- 17: Lamellenkontakt
- 19: Abreißschraube
- 20: Adapterstück
- 200: Adapterstück für Doppelkabel
- 22: Feldsteuerteil im Adapterstück
- 22.1: Steuertrichter
- 25: Einführkanal
- 30: Buchsenteil (Geräteanschlussteil)
- 31: Innenkonus
- 32: Befestigungsflansch
- 33: Feldsteuerteil im Buchsenteil
- 36: Druckhülse
- 37: Befestigungsring
- 38: Druckfeder
- 38': Befestigungsschrauben
- 40: Überspannungsableiter-Modul
- 50: Kabel
- 500: Doppelkabel
- 52: Kabelleiter
- 54: Kabelende
- 60: Stützrohr
- 62: Kopfstück

## Patentansprüche

1. Vorrichtung zum Stecken von Geräten oder Kabel an eine elektrische Anlage (G) im Mittel- oder Hochspannungsbereich
• mit einem am Ende (54) des Geräts oder des Kabels anzuordnenden Steckerteil (10)
• und mit einem das Steckerteil (10) aufnehmenden, an einer Anlagengehäuseöffnung (32) angeordneten Buchsenteil (30),
wobei das Steckerteil (10) als Außenkonus (11) und das Buchsenteil (30) als Innenkonus (31) in körperlichen Kontakt treten, und
• im Steckerteil (10) und im Buchsenteil (30) jeweils Feldsteuerelemente (14, 22, 33) integriert sind, die den Feldverlauf an unstetigen Übergängen steuern,
• wobei Befestigungsmittel (36, 37, 38') einsetzbar sind, die am Steckerteil (10) angreifen und die Befestigungsmittel (36, 37, 38') Federmittel (38) beaufschlagen, um den körperlichen Kontakt unter Federkraft herzustellen,
wobei am Steckerteil (10) Aufnahmemittel (13) vorhanden sind, die mit den Befestigungsmitteln (36, 37, 38') zusammenwirken,
• das Steckerteil (10) auf seiner gesamten Länge aus elastischem Werkstoff hergestellt ist,
• im Steckerteil (10) mindestens eine Aufnahmeöffnung (15) für ein Gerät (40) oder das Ende (54) eines Kabels (50) ausgebildet ist, und
• das Aufnahmemittel am Steckerteil (10) als ringförmige Nut (13) und die Befestigungsmittel als zylindrische Hülse (36) und an die Hülse angreifender Befestigungsring (37) ausgebildet sind, wobei die Abmessungen der Nut (13) der Aufnahme der Hülse (36) entsprechend geformt sind, und
• die Aufnahmeöffnung (15) derart angeordnet ist, dass sie außerhalb des das Steckerteil (10) verspannenden Wirkungsbereichs der Kräfte der Befestigungsmittel (36, 37, 38, 38') liegt, und
• wobei zur Aufnahme eines Leiters (52, 62) eines einzuführenden Kabels (50) oder eines einzuführenden Geräts (40) im Steckerteil (10) in zentraler Lage und in voller Länge des Steckerteils (10) ein vom Werkstoff des Steckerteils (10) umgossenes Metallrohr (60) eingelegt ist, dessen Innendurchmesser größer ist als der Durchmesser des Leiters (52) eines einzuführenden Kabels (50) oder Geräts (40), **dadurch gekennzeichnet, dass**
• das zur Aufnahmeöffnung (15) weisende Ende des Metallrohrs (60) von einem im Werkstoff des Steckerteils (10) eingebrachten Feldsteuerelement (14, 22.1) umgeben ist.

2. Steckvorrichtung nach Anspruch 1, **dadurch gekennzeichnet, dass** die Befestigungsnut (13) in Steckrichtung vor dem Außenkonus (11) des Steckteils (10) ausgebildet ist.

3. Steckvorrichtung nach einem der vorhergehenden Ansprüche, **dadurch gekennzeichnet, dass** das Steckerteil (10) zweiteilig ausgebildet ist, aus einem Adapterstück (20) und einem Grundkörper (12), wobei das Adapterstück (20) mit mindestens einem Einführkanal (25) für ein Ende (54) eines Kabels (50) oder eines Geräts (40) ausgebildet ist, und der Grundkörper (12) einen Aufnahmekanal (15) aufweist, der dem Außendurchmesser des Adapterstücks (20) entspricht.

4. Steckvorrichtung nach Anspruch 3, **dadurch gekennzeichnet, dass** der Einführkanal (25) im Adapterstück (20) in Länge und Durchmesser für unterschiedliche Querschnitte des einzuführenden Geräts oder des Kabelendes (54) ausgebildet ist.

5. Steckvorrichtung nach einem der vorhergehenden Ansprüche, **dadurch gekennzeichnet, dass** die Oberfläche des Steckerteils (10) halbleitend ausgebildet ist und am Steckerteil (10) Mittel (E) zum Kontaktieren der Oberfläche mit Erdpotential vorhanden sind.

6. Steckvorrichtung nach einem der vorhergehenden Ansprüche, **dadurch gekennzeichnet, dass** im Steckerteil (10) eine Elektrode (B1) integriert ist, die als kapazitives Messelement zum Abgriff (MP) von Ladung ausgebildet ist.

## Claims

1. Assembly for connecting devices or cables to an electrical installation (G) in the medium-high or high-voltage range
• with a male portion (10) to be arranged at the end (54) of the device or cable
• and with a female portion (30) arranged at a case opening (32) of an installation for receiving the male portion (10),
wherein the male portion (10) and the female portion (30) come into physical contact as external taper (11) and internal taper (31) respectively, and
• the male portion (10) and the female portion (30) each integrate field control elements (14, 22, 33) which regulate field behaviour at unsteady transitions,
• wherein fixing means (36, 37, 38') acting on the male portion (10) can be used and the fixing means (36, 37, 38') engage spring devices (38) to create the physical contact under spring forces,
wherein locating means (13) are provided on the male portion (10) to cooperate with the fixing means (36, 37, 38'),
• the entire length of the male portion (10) is made of an elastic material,
• at least one receiving opening (15) for a device (40) or the end (54) of a cable (50) is formed in the male portion (10), and
• the locating means on the male portion (10) is formed like an annular groove (13) and the fixing means like a cylindrical sleeve (36) and retaining ring (37) acting on the sleeve, with the dimensions of the groove (13) being made so as to receive the sleeve (36), and
• the receiving opening (15) is arranged so that it lies outside the range of influence of the forces of the fixing means (36, 37, 38, 38') bracing the male portion (10) and
• wherein a metal tube (60) enclosed in material of the male portion (10) and with an internal diameter larger than the diameter of the conductor (52) of a cable (50) or device (40) to be inserted is laid in a central position in the male portion (10) and over the full length of the male portion (10) so as to receive a conductor (52, 62) of a cable (50) to be introduced or a device (40) to be introduced,
**characterised in that**
the end of the metal tube (60) pointing to the receiving opening (15) is surrounded by a field control element (14, 22.1) housed in the material of the male portion (10).

2. Connector assembly in accordance with claim 1, **characterised in that** the retaining groove (13) is formed ahead of the outer taper (11) of the male portion (10) in plug-in direction.

3. Connector assembly in accordance with one of the preceding claims, **characterised in that** the male portion (10) is formed in two parts, an adapter piece (20) and a main body (12), with the adapter piece (20) having at least one lead-in duct (25) for one end (54) of a cable (50) or a device (40), and the main body (12) having a receiving duct (15) matching the external diameter of the adapter piece (20).

4. Connector assembly in accordance with claim 3, **characterised in that** length and diameter of the lead-in duct (25) in the adapter piece (20) are designed for different cross sections of the device or cable end (54) to be inserted.

5. Connector assembly in accordance with one of the preceding claims, **characterised in that** the surface of the male portion (10) is made semi-conducting and that means (E) are provided on the male portion (10) for contacting the surface with earth potential.

6. Connector assembly in accordance with one of the preceding claims, **characterised in that** an electrode (B1) formed as a capacitive measuring element for pick-up (MP) of load is integrated into the male portion (10).

## Revendications

1. Dispositif de connexion d'appareils ou de câbles à une installation électrique (G) dans le domaine de la moyenne ou haute tension,
• comprenant un élément connecteur (10) destiné à être placé à l'extrémité (54) de l'appareil ou du câble,
• et comprenant une partie de douille (30) située au niveau d'une ouverture de boîtier d'installation (32) et recevant l'élément connecteur (10),
l'élément connecteur (10), en tant que cône extérieur (11), et la partie de douille (30), en tant que cône intérieur (31), entrant en contact physique et
• des éléments de commande de champ (14, 22, 33) qui commandent la répartition du champ au niveau de transitions discontinues étant intégrés à chaque fois dans l'élément connecteur (10) et dans la partie de douille (30),
• des moyens de fixation (36, 37, 38') entrant en contact avec l'élément connecteur (10) pouvant être utilisés et les moyens de fixation (36, 37, 38') ayant une action sur un moyen élastique (38) pour créer le contact physique sous l'effet d'une force élastique,
des moyens de réception (13) coopérant avec les moyens de fixation (36, 37, 38') étant présents sur l'élément connecteur (10),
• l'élément connecteur (10) étant fabriqué sur toute sa longueur dans un matériau élastique,
• au moins une ouverture de réception (15) pour un appareil (40) ou l'extrémité (54) d'un câble (50) étant formée dans l'élément connecteur (10) et
• le moyen de réception présent sur l'élément connecteur (10) étant exécuté en tant que rainure annulaire (13) et les moyens de fixation étant exécutés en tant que manchon cylindrique (36) et bague de fixation (37) entrant en contact avec le manchon, les dimensions de la rainure (13) étant formées d'une manière correspondant à la réception du manchon (36) et
• l'ouverture de réception (15) étant située de manière à se trouver à l'extérieur du domaine d'action des forces des moyens de fixation (36, 37, 38, 38') contraignant l'élément connecteur (10) et
• un tube métallique (60) entouré du matériau de l'élément connecteur (10) étant inséré en position centrale dans l'élément connecteur (10) et sur toute la longueur de l'élément connecteur (10) pour recevoir un conducteur (52, 62) d'un câble (50) à introduire ou d'un appareil (40) à introduire, tube métallique dont le diamètre intérieur est supérieur au diamètre du conducteur (52) d'un câble (50) ou appareil (40) à introduire,
**caractérisé par le fait que**
• l'extrémité du tube métallique (60) tournée vers l'ouverture de réception (15) est entourée d'un élément de commande de champ (14, 22.1) placé dans le matériau de l'élément connecteur (10).

2. Dispositif de connexion selon la revendication 1, **caractérisé par le fait que** la rainure de fixation (13) est formée avant le cône extérieur (11) de l'élément connecteur (10) dans la direction de connexion.

3. Dispositif de connexion selon l'une des revendications précédentes, **caractérisé par le fait que** l'élément connecteur (10) est exécuté en deux parties, un adaptateur (20) et un élément de base (12), l'adaptateur (20) étant pourvu d'au moins un canal d'introduction (25) pour une extrémité (54) d'un câble (50) ou d'un appareil (40) et le corps de base (12) étant pourvu d'un canal de réception (15) qui correspond au diamètre extérieur de l'adaptateur (20).

4. Dispositif de connexion selon la revendication 3, **caractérisé par le fait que** le canal d'introduction (25) dans l'adaptateur (20) est exécuté, du point de vue de sa longueur et de son diamètre, pour différentes sections transversales de l'appareil ou de l'extrémité de câble (54) à introduire.

5. Dispositif de connexion selon l'une des revendications précédentes, **caractérisé par le fait que** la surface de l'élément connecteur (10) est exécutée de manière à être semi-conductrice et des moyens (E) de mise en contact de la surface avec un potentiel de terre sont présents sur l'élément connecteur (10).

6. Dispositif de connexion selon l'une des revendications précédentes, **caractérisé par le fait qu'**une électrode (B1) exécutée en tant qu'élément de mesure capacitif pour la détection (MP) d'une charge est intégrée dans l'élément connecteur (10).
